**Europäisches Patentamt**

**European Patent Office**

**Office européen des brevets**

(19)

(11) Veröffentlichungsnummer : **0 516 656 B1**

(12) **EUROPÄISCHE PATENTSCHRIFT**

(45) Veröffentlichungstag der Patentschrift :
**08.06.94 Patentblatt 94/23**

(51) Int. Cl.$^5$ : **C08F 20/06,** C09D 17/00

(21) Anmeldenummer : **91903795.2**

(22) Anmeldetag : **15.02.91**

(86) Internationale Anmeldenummer :
**PCT/EP91/00298**

(87) Internationale Veröffentlichungsnummer :
**WO 91/12278 22.08.91 Gazette 91/19**

(54) **VERFAHREN ZUR HERSTELLUNG VON POLYACRYLSÄUREN.**

(30) Priorität : **19.02.90 DE 4004953**

(43) Veröffentlichungstag der Anmeldung :
**09.12.92 Patentblatt 92/50**

(45) Bekanntmachung des Hinweises auf die
Patenterteilung :
**08.06.94 Patentblatt 94/23**

(84) Benannte Vertragsstaaten :
**AT BE CH DE DK ES FR GB GR IT LI LU NL SE**

(56) Entgegenhaltungen :
**EP-A- 0 100 947**
**US-A- 3 705 137**

(73) Patentinhaber : **Chemische Fabrik**
**Stockhausen GmbH**
**Bäkerpfad 25**
**D-47805 Krefeld (DE)**

(72) Erfinder : **LANDSCHEIDT, Alfons**
**Lefarthstrasse 11**
**D-4150 Krefeld (DE)**
Erfinder : **GEBAUER, Andreas**
**Craucauer Strasse 84**
**D-4150 Krefeld (DE)**

(74) Vertreter : **Klöpsch, Gerald, Dr.-Ing.**
**Patentanwalt**
**An Gross St. Martin 6**
**D-50667 Köln (DE)**

EP 0 516 656 B1

Jouve, 18, rue Saint-Denis, 75001 PARIS

## Beschreibung

Die Erfindung betrifft ein Verfahren zur Herstellung von Polyacrylsäuren und Copolymerisaten der Acrylsäure mit bis zu 50 mol% an Comonomeren, die ein Molekulargewicht von kleiner als 100.000, gemessen bei einem pH-Wert von 8 aufweisen und die zu 10 bis 60 mol% mit Calciumhydroxid neutralisiert sind sowie die Verwendung dieser Produkte als Mahl- und Dispergierhilfsmittel für Calciumcarbonat.

Die Einsatzzwecke von Polyacrylsäuren sind vielfältig. Genannt seien die Verwendung als Antibelagmittel in Wasserkreisläufen sowie die Verwendung als Mahlhilfsmittel und/oder Dispergierhilfsmittel zur Ferstellung von Pigmentaufschlämmungen. Von erheblichem Interesse ist dabei die Mahlung und Dispergierung von Calciumcarbonat. Feingemahlenes Calciumcarbonat wird als Füllstoff in der Papierindustrie eingesetzt.

Polyacrylsäuren werden durch Polymerisation der Acrylsäure hergestellt. Üblich ist die Polymerisation in einem Lösungsmittel, bevorzugt werden Wasser oder Gemische aus Wasser und Isopropanol verwendet.

In der DE-A-34 32 082 wird die Herstellung von Erdalkaliacrylat aus Acrylsäure und Erdalkalicarbonat beschrieben. Durch weitere Umsetzung mit Alkalibicarbonat wird schließlich Alkaliacrylat erhalten.

Die EP-A-0100948 betrifft die Verwendung von Polymeren der Acrylsäure als Dispergierhilfsmittel. Die Polyacrylsäure wird dafür nur teilweise neutralisiert.

In der EP-A-0046573 wird erwähnt, daß die als Mahlhilfsmittel beanspruchten Polyacrylsäuren mit Natrium-, Kalium-, Ammonium-, Zink- oder Calcium-Hydroxiden oder auch mit primären, sekundären oder tertiären Aminen neutralisiert werden können.

Durch Zumischung von $C_1$ bis $C_5$-Alkoholen zur neutralisierten wäßrigen Polyacrylsäurelösung kann nach EP-A-0127388 eine Phasentrennung erreicht werden, die zur Reinigung des Polymeren ausgenutzt werden kann. Als für die Neutralisation mögliche Kationen werden Natrium, Kalium, Lithium und Ammonium genannt.

Die gleiche Thematik mit denselben Kationen wird auch in der EP-A-0129329 behandelt.

Für die meisten Anwendungen muß die Polyacrylsäure in neutralisierter Form vorliegen. Als Gegenionen werden normalerweise Natrium, Ammonium, Kalium, Calcium, Magnesium, Amine oder Kombinationen davon eingesetzt. Der Anteil von Ionen, die alleine eingesetzt ein unlösliches Polyacrylat bilden, darf naturgemäß nur maximal so hoch sein, daß die Polyacrylsäure noch nicht ausgefällt wird. Aus diesem Grund ist z.B. die maximal mögliche Menge an Calcium-Ionen 60 mol%.

Nach der Lehre der EP-A-0100947 ist es zweckmäßig, als Mahlhilfsmittel Polyacrylsäuren zu verwenden, die teilweise mit Calcium neutralisiert sind. Die Polymerisation findet in Gemischen aus Isopropanol und Wasser statt. Andererseits ist es nicht möglich, in Gegenwart von Isopropanol die teilweise mit Calcium neutralisierte Acrylsäure ohne Ausfällung des Polymerisats zu polymerisieren. Die Neutralisation mit Calcium kann erst dann erfolgen, wenn das Isopropanol aus der Polyacrylsäurelösung abdestilliert ist, da sonst eine Ausfällung des Polymerisats eintritt. Die Neutralisation der Polyacrylsäure mit Calciumhydroxid nach der Polymerisation hat eine Reihe von gravierenden Nachteilen. So ist die benötigte Zeit bis zur Lösung des Calciumhydroxids in der Polymerisatlösung extrem lange, daneben ist auch nach der Neutralisation eine starke Trübung der Polymerisatlösung zu beobachten.

Aufgabe der vorliegenden Erfindung ist es, Polymerisate der Acrylsäure zur Verfügung zu stellen, die teilweise mit Calcium neutralisiert sind und nicht die oben erwähnten Nachteile des Arbeitens nach EP 0100947 besitzen.

Gelöst wurde diese Aufgabe durch ein Verfahren zur Herstellung von Polyacrylsäuren bzw. Copolymerisaten der Acrylsäure mit bis zu 50 mol% an Comonomeren, die, gemessen bei einem pH-Wert von 8,0 ein Molekulargewicht von kleiner als 100.000 aufweisen und zu 10 bis 60 mol% mit Calciumhydroxid neutralisiert sind, das dadurch gekennzeichnet ist, daß die Acrylsäure vor der Polymerisation mit Calciumhydroxid teilneutralisiert wird und die weitere Neutralisation mit monovalenten Basen nach der Polymerisation durchgeführt wird.

Überraschenderweise wurde gefunden, daß die Neutralisation der monomeren Acrylsäure mit Calciumhydroxid wesentlich schneller verläuft und zu besseren Ergebnissen führt als die Neutralisation der Polyacrylsäure nach erfolgter Polymerisation.

Bevorzugt weisen die erfindungsgemäßen Polymeren ein Molekulargewicht von 500 bis 50.000 auf, bestimmt nach der Methode der Gelpermeations-Chromatographie, insbesondere ein Molekulargewicht von 3000 bis 9000.

Als Comonomere können N-alkylsubstituierte Acrylamide oder Methacrylamide eingesetzt werden, die am Alkylrest eine tertiäre Aminogruppe tragen und die in basischer oder quaternierter Form eingesetzt werden können.

Beispielhaft seien genannt Dimethylaminopropylacrylamid, Dimethylaminopropylmethacrylamid, Dimethylamino-2,2-dimethylpropylacrylamid, Dimethylamino-2,2-dimethylpropylmethacrylamid und Dimethylaminoethylacrylamid. Die vorgenannten Monomere können auch in quaternierter Form vorliegen, wie z.B. das Trimethylacrylamidopropylammoniumchlorid.

Als weitere Comonomere können saure Monomere wie Methacrylsäure oder 2-Acrylamido-2-propansulfonsäure, als nichtionogene Comonomere Acrylamid, Methacrylamid, Acrylsäuremethylester, Hydroxypropylacrylat oder Acrylnitril eingesetzt werden.

Durch diese Comonomere soll eine Modifikation der Eigenschaften der Copolymerisate erreicht werden. Nach der Polymerisation wird mit einer wäßrigen monovalenten Base, z.B. Natronlauge, Ammoniak, Kalilauge oder Aminen Neutralisation der polyacrylsäure vervollständigt.

Die erfindungsgemäßen Polymerisate können für viele Zwecke verwendet werden. Eine bevorzugte Einsatzmöglichkeit ist die Herstellung von konzentrierten Feststoffaufschlämmungen. Pigmentaufschlämmungen, die unter Anwendung der erfindungsgemäßen Copolymerisate hergestellt werden, zeichnen sich gegenüber den Produkten nach EP 0100947 durch eine deutlich verbesserte Lagerstabilität aus.

Die Erfindung betrifft daher auch die Verwendung der Verfahrensprodukte als Mahl- und Dispergierhilfsmittel für Calciumcarbonat. Die Einsatzmenge als Mahl- und Dispergierhilfsmittel beträgt dabei zwischen 0,1 und 1,0 Gew.-%, jeweils bezogen Feststoff (Polymerisat) auf Feststoff (Calciumcarbonat).

Die erfindungsgemäßen Polyacrylsäuren können nach an sich bekannten Polymerisationsmethoden erhalten werden. Die Polymerisation wird in wäßriger Lösung durchgeführt. Die Initiierung der Polymerisation erfolgt mit Hilfe von radikalischen Polymerisationskatalysatoren.

Verwendet werden können Redoxsysteme und/oder thermisch zerfallende Radikalbildner vom Typ der Azoverbindungen wie z.B. Azoisobuttersäuredinitril. Als Redoxsysteme eignen sich z.B: Kombinationen aus Wasserstoffperoxid, Salzen der Peroxydischwefelsäure oder tert.-Butylhydroperoxid mit Natriumsulfit oder Natriumdithionit als Reduktionskomponente.

Zur Erzielung der erfindungsgemäßen Molekulargewichte unter 100.000 ist es sinnvoll, die Polymerisation in Gegenwart von Polymersationsreglern durchzuführen. Als Regler wirksam sind Hydroxylammoniumsalze sowie Mercaptane, z.B. Mercaptoethanol oder Thioglykolsäure.

Es ist vorteilhaft, die Polymerisation unter adiabatischen Bedingungen durchzuführen. Der Polymerisationsstart erfolgt dann zweckmäßig bei niedrigen Temperaturen, z.B. bei 20°C. Die durch die freiwerdende Polymerisationswärme erreichte Endtemperatur hängt von den eingesetzten Monomeren und Konzentrationsverhältnissen ab und kann bei einem entsprechenden Druck z.B. bis 180° betragen.

Die Polymerisation kann auch so durchgeführt werden, daß man einen Teil des Monomerengemisches vorlegt, die Copolymerisation startet und dann die Monomerenmischung stetig zudosiert. Die Temperatur bei der Copolymerisation kann in einem weiteren Bereich schwanken.

Ja nach verwendeten Katalysatoren können Temperaturen zwischen 50°C und 200°C optimal sein. Möglich ist es auch, die Polymerisation am Siedepunkt des Lösungsmittels oder unter Druck bei darüberliegenden Temperaturen durchzuführen.

Vor der Polymerisation wird die Monomerenlösung mit Calciumhydroxid teilneutralisiert. Zweckmäßig ist die Herstellung einer Suspension von Calciumhydroxid in Wasser, in die anschließend die Acrylsäure und eventuell Comonomere eingetragen werden. Möglich ist jedoch auch eine Verfahrensweise, bei der das Calciumhydroxid in die vorgelegte Monomerlösung zugegeben wird. Erfindungsgemäß wird die Acrylsäure zu 10 bis 60 mol% mit Calcium neutralisiert. Bei mehr als 60 mol% Calcium tritt während der Polymerisation eine Ausfällung des unlöslichen Calciumpolyacrylats auf.

Beispiel 1:

In 700 g Wasser werden 38 g Calciumhydroxid suspendiert und anschließend 250 g Acrylsäure zugegeben. Innerhalb von 15 min ist das Calciumhydroxid gelöst, die Temperatur steigt dabei von 20°C auf 32°C. Die Trübungsmessung ergibt einen Wert von 3,5 TE(F) (Trübungseinheiten auf Formazin-Standard). Nach dem erneuten Abkühlen auf 20°C wird die Polymerisation durch Einrühren von 16 ml Mercaptoethanol, 1 ml l%iger Eisen(II)sulfatlösung und 5 ml 35%iges Wasserstoffperoxid initiiert. Nach Zugabe der Katalysatoren wird innerhalb von 2 min eine Endtemperatur von ca. 90°C erreicht. Zur Vervollständigung der Reaktion werden 2 ml 40%ige Hydroxylaminhydrochloridlösung und 4,5 ml 35%iges Wasserstoffperoxid zugegeben. Die Nachreaktionszeit beträgt 1 Stunde.
Nach Abkühlen auf 60°C wird mit ca. 220 g 45%ige Natronlauge innerhalb von 20 min auf pH 7 neutralisiert und auf 20°C gekühlt. Das Endprodukt hat eine Trübung von 10,5 TE(F). Die Molmasse ($M_W$) beträgt 5491 (s. Tabelle 2).

Vergleichsbeispiel 1 :

Es wird eine Mischung aus 700 g Wasser und 250 g Acrylsäure hergestellt. Analog Beispiel 1 wird die Polymerisation bei 20°C initiiert und nach 2 min eine Endtemperatur von ca. 90°C erreicht. Die Nachreaktion er-

3

folgt analog Beispiel 1 innerhalb 1 Stunde. Anschließend wird auf 60°C abgekühlt und 38 g Calciumhydroxid eingetragen.

Nach ca. 2.15 h ist das Calciumhydroxid gelöst, die Trübung des teilneutralisierten Produktes beträgt 37 TE(F). Mit ca. 220 g 45%ige Natronlauge wird innerhalb von 20 min auf pH 7 neutralisiert und auf 20°C gekühlt. Das Endprodukt hat eine Trübung von 21,2 TE(F). Die Molmasse($M_W$) beträgt 5913 (s. Tabelle 2).

Beispiel 2/Vergleichsbeispiel 2:

Die Verfahrensweise erfolgt analog Beispiel 1, bzw. Vergleichsbeispiel 1. Als Monomere werden 225 g Acrylsäure und 41,7 g 60%ige Trimethylacryloylamidopropyl-ammonium-chlorid-Lösung eingesetzt. Die Neutralisation erfolgt mit 34,7 g Calciumhydroxid und 188 g 45%iger Natronlauge.

Beispiel 3/Vergleichsbeispiel 3:

Die Verfahrensweise erfolgt analog Beispiel 1, bzw. Vergleichsbeispiel 1. Als Monomere werden 200 g Acrylsäure und 50 g Dimethylaminopropylacrylamid eingesetzt.
Die Neutralisation erfolgt mit 30,8 g Calciumhydroxid und 145 g 45%iger Natronlauge.

Beispiel 4/Vergleichsbeispiel 4:

Die Verfahrensweise erfolgt analog Beispiel 1, bzw. Vergleichsbeispiel 1. Als Monomere werden 175 g Acrylsäure und 187,5 g 40%ige Acrylamid-Lösung eingesetzt.
Die Neutralisation erfolgt mit 27,0 g Calciumhydroxid und 146 g-Natronlauge.

Beispiel 5/Vergleichsbeispiel 5:

Die Verfahrensweise erfolgt analog Beispiel 1, bzw. Vergleichsbeispiel 1. Als Monomere werden 150 g Acrylsäure und 100 g Methacrylsäure eingesetzt.
Die Neutralisation erfolgt mit 23,1 g Calciumhydroxid und 230 g 45%iger Natronlauge.

Beispiel 6/Vergleichsbeispiel 6:

Die Verfahrensweise erfolgt analog Beispiel 1, bzw. Vergleichsbeispiel 1. Als Monomere werden 125 g Acrylsäure und 125 g 2-Acrylamido-2-propansulfonsäure eingesetzt.
Die Neutralisation erfolgt mit 19,3 g Calciumhydroxid und 164 g 45%iger Natronlauge.

## Tabelle 1:

Ergebnisse der Trübungsmessung:

| | Zeit zur Ca(OH)$_2$-Neutralisation $[\text{min}]$ | Trübung nach der Ca(OH)$_2$-Zugabe $[\text{TE(F)}]$ | Trübung im Endprodukt $[\text{TE(F)}]$ |
|---|---|---|---|
| Beispiel 1 | 15 | 3,5 | 10,5 |
| Vergleich 1 | 135 | 37 | 21 |
| Beispiel 2 | 15 | 5,5 | 8 |
| Vergleich 2 | 150 | 40,5 | 23,5 |
| Beispiel 3 | 25 | 16,5 | 4,5 |
| Vergleich 3 | 160 | 81,5 | 22 |
| Beispiel 4 | 20 | 24 | 9,5 |
| Vergleich 4 | 140 | 26,9 | 25 |
| Beispiel 5 | 20 | 18 | 8,1 |
| Vergleich 5 | 115 | 29 | 15,2 |
| Beispiel 6 | 15 | 26,3 | 8,3 |
| Vergleich 6 | 35 | 18 | 34 |

## Tabelle 2:

Molmasse $M_W$

| | Beispiel | Vergleichsbeispiel |
|---|---|---|
| 1 | 5491 | 5913 |
| 2 | 4317 | 4124 |
| 3 | 10655 | 11250 |
| 4 | 18397 | 17891 |
| 5 | 36320 | 35563 |
| 6 | 13257 | 13814 |

Anwendungsbeispiel 1:

Das Polymerisat aus Beispiel 1 wird als Mahl- und Dispergierhilfsmittel für Calciumcarbonat eingesetzt. In ca. 500 g Wasser werden 22,5 g trockenes Polymerisat (0,9 Gew.-% Feststoff (Polymerisat) auf Feststoff (Calciumcarbonat)) gelöst und darin 1900 g Calciumcarbonat suspendiert. Nach der Mahlung mit einer Laborperlmühle enthält die Aufschlämmung ca. 77 % Feststoff, der Mahlgrad ist zu 80 % kleiner 1μm. Die erhaltenen Viskositätsdaten sind in Tabelle 3 gelistet.

Anwendungs-Vergleichsbeispiel 1:

Das Polymerisat aus Vergleichsbeispiel 1 wird analog dem Ankendungsbeispiel 1 eingesetzt.

## Tabelle 3:

| Zeit d nach der Mahlung | Anwendungs-beispiel 1 Viskosität $[mPa.s]$ | Anwendungs-Vergleichs-beispiel 1 Viskosität $[m.Pas]$ |
|---|---|---|
| 0 | 439 | 346 |
| 1 | 744 | 764 |
| 7 | 710 | 980 |
| 14 | 610 | 1060 |

EP 0 516 656 B1

**Patentansprüche**

1. Verfahren zur Herstellung von Polyacrylsäuren bzw. Copolymerisaten der Acrylsäure mit bis zu 50 mol% an Comonomeren, die ein Molekulargewicht, gemessen bei einem pH-Wert von 8,0 von kleiner als 100.000 aufweisen und zu 10-60 mol% mit Calciumhydroxid neutralisiert sind, dadurch gekennzeichnet, daß die Acrylsäure vor der Polymerisation mit Calciumhydroxid teilneutralisiert wird und die weitere Neutralisation mit monovalenten Basen nach der Polymerisation durchgeführt wird.

2. Verfahren nach Anspruch 1, dadurch gekennzeichnet, daß als Comonomere N-alkylsubstituierte Acrylamide oder Methacrylamide, die am Alkylrest eine tertiäre Aminogruppe tragen, in basischer Form oder in quaternierter Form eingesetzt werden.

3. Verfahren nach Anspruch 1, dadurch gekennzeichnet, daß als Comonomere säuregruppenhaltige Monomere wie Methacrylsäure oder 2-Acrylamido-2-propansulfonsäure eingesetzt werden.

4. Verfahren nach Anspruch 1, dadurch gekennzeichnet, daß als Comonomere nichtionogene Monomere wie Acrylamid, Methacrylamid, Acrylsäuremethylester, Hydroxylpropylacrylat oder Acrylnitril eingesetzt werden.

5. Verfahren nach Anspruch 1, dadurch gekennzeichnet, daß die Polymerisate das Molekulargewicht von vorzugsweise 500 bis 50000, insbesondere ein Molekulargewicht von 3000 bis 9000 aufweisen.

6. Verfahren nach Anspruch 1, dadurch gekennzeichnet, daß als monovalente Basen Natronlauge, Ammoniak, Kalilauge oder Amine verwendet werden.

7. Verwendung der nach den Ansprüchen 1 bis 6 hergestellten Produkte als Mahl- und Dispergierhilfsmittel für Calciumcarbonat.

**Claims**

1. A process for the production of polyacrylic acids and copolymers of acrylic acid with up to 50 mol-% of comonomers, which, measured at a pH-value of 8.0, have a molecular weight of less than 100,000 and are neutralized to the extent of 10 to 60 mol-% with calcium hydroxide, characterized in that the acrylic acid is partially neutralized with calcium hydroxide prior to polymerization and that the further neutralization is carried out with monovalent bases after the polymerization.

2. The process according to claim 1 characterized in that N-alkyl-substituted acrylamides or methacrylamides having a tertiary amino group at the alkyl residue are used as comonomers in basic or quaternized form.

3. The process according to claim 1 characterized in that acid groups-containing monomers, such as methacrylic acid or 2-acrylamido-2-propane sulfonic acid are used as comonomers.

4. The process according to claim 1 characterized in that non-ionogenic monomers, such as acrylamide, methacrylamide, methyl acrylate, hydroxylpropyl acrylate, or acrylonitrile are used as comonomers.

5. The process according to claim 1 characterized in that the polymers have the molecular weight of preferably 500 to 50,000, in particular a molecular weight of 3,000 to 9,000.

6. The process according to claim 1 characterized in that sodium hydroxide solution, ammonia, potassium hydroxide solution or amines are used as monovalent bases.

7. The use of the products manufactured according to claims 1 to 6 as grinding and dispersing aids for calcium carbonate.

**Revendications**

1. Procédé de préparation de polyacides acryliques ou de copolymères de l'acide acrylique comportant jus-

7

qu'à 50% molaires de comonomères, qui possèdent un poids moléculaire, mesuré à une valeur du pH de 8,0, inférieur à 100.000 et qui sont neutralisés jusqu'à 10-60% molaires par de l'hydroxyde de calcium, caractérisé en ce qu'on neutralise partiellement l'acide acrylique avant la polymérisation avec de l'hydroxyde de calcium et on entreprend la neutralisation complémentaire avec des bases monovalentes après la polymérisation.

2. Procédé suivant la revendication 1, caractérisé en ce que, à titre de comonomères, on met en oeuvre des méthacrylamides ou des acrylamides, à substitution N-alkylique, qui portent un radical amino tertiaire sur le groupe alkyle, sous forme basique ou sous forme quaternisée.

3. Procédé suivant la revendication 1, caractérisé en ce que, à titre de comonomère, on utilise des monomères contenant des radicaux acide, comme l'acide méthacrylique ou l'acide 2-acrylamido-2-propanesulfonique.

4. Procédé suivant la revendication 1, caractérisé en ce qu'on utilise des monomères non ionogènes, tels que l'acrylamide, le méthacrylamide, l'acrylate de méthyle, l'acrylate d'hydroxypropyle ou l'acrylonitrile, à titre de comonomère.

5. Procédé suivant la revendication 1, caractérisé en ce que les polymères présentent un poids moléculaire qui varie de préférence de 500 à 50000, plus particulièrement un poids moléculaire de 3000 à 9000.

6. Procédé suivant la revendication 1, caractérisé en ce qu'on utilise une lessive sodique, l'ammoniac, une lessive potassique, ou des amines, à titre de bases monovalentes.

7. Utilisation des produits préparés par mise en oeuvre de l'une quelconque des revendications 1 à 6, à titre d'adjuvants de broyage et de dispersion pour le carbonate de calcium.